# EUROPÄISCHE PATENTSCHRIFT

(11) **EP 3 497 361 B1**
(45) Veröffentlichungstag und Bekanntmachung des Hinweises auf die Patenterteilung: **30.03.2022**
(21) Anmeldenummer: 17736669.7
(22) Anmeldetag: 06.07.2017
(51) Int. Cl.: F17C 1/00, F17C 13/00

(54) **VERFAHREN ZUM EINSTELLEN DER TEMPERATUR UND/ODER DES DRUCKS VON BRENNSTOFF, INSBESONDERE VON WASSERSTOFF, IN MEHREREN DRUCKBEHÄLTERN EINES FAHRZEUGS AUF JEWEILS EINEN TEMPERATURSOLLWERT UND/ODER JEWEILS EINEN DRUCKSOLLWERT VOR EINEM BEFÜLLUNGSVORGANG DER DRUCKBEHÄLTER**
METHOD FOR SETTING THE TEMPERATURE AND/OR THE PRESSURE OF FUEL, IN PARTICULAR OF HYDROGEN, IN MULTIPLE PRESSURE VESSELS OF A VEHICLE TO IN EACH CASE ONE TEMPERATURE SETPOINT VALUE AND/OR IN EACH CASE ONE PRESSURE SETPOINT VALUE BEFORE A FILLING PROCESS OF THE PRESSURE VESSELS
PROCÉDÉ PERMETTANT DE RÉGLER LA TEMPÉRATURE ET/OU LA PRESSION D'UN COMBUSTIBLE, EN PARTICULIER D'HYDROGÈNE, DANS PLUSIEURS RÉCIPIENTS SOUS PRESSION D'UN VÉHICULE À RESPECTIVEMENT UNE VALEUR DE CONSIGNE DE TEMPÉRATURE ET/OU À RESPECTIVEMENT UNE VALEUR DE CONSIGNE DE PRESSION AVANT UNE OPÉRATION DE REMPLISSAGE DES RÉCIPIENTS SOUS PRESSION

(30) Priorität: 08.08.2016 DE 102016214680
(43) Veröffentlichungstag der Anmeldung: 19.06.2019
(73) Patentinhaber: Bayerische Motoren Werke Aktiengesellschaft, 80809 München (DE)
(72) Erfinder: HETTENKOFER, Simon, 81377 München (DE); PELGER, Andreas, 85737 Ismaning (DE); SCHAEFER, Andreas, 85247 Schwabhausen (DE); SCHOTT, Stefan, 80997 München (DE); SZOUCSEK, Klaus, 85778 Haimhausen (DE)
(86) Internationale Anmeldenummer: PCT/EP2017/066932
(87) Internationale Veröffentlichungsnummer: WO 2018/028900

(56) Entgegenhaltungen:
- WO-A1-2012/038039
- DE-A1-102012 208 821

## Beschreibung

Die Erfindung betrifft ein Verfahren zum Einstellen der Temperatur und/oder des Drucks von Brennstoff, insbesondere von Wasserstoff, in mehreren Druckbehältern eines Fahrzeugs auf jeweils einen Temperatursollwert und/oder jeweils einen Drucksollwert vor einem Befüllungsvorgang der Druckbehälter sowie ein Druckbehältersystem in einem Fahrzeug, umfassend mehrere Druckbehälter und eine Steuerungseinrichtung.

In Fahrzeugen, die mit CNG oder CGH₂ angetrieben werden, umfasst ein Druckbehältersystem oft mehrere Druckbehälter bzw. Drucktanks, in denen der Brennstoff bzw. das Gas bzw. der Wasserstoff gespeichert ist. Der Brennstoff wird aus den Druckbehältern einer Brennstoffumsetzvorrichtung zugeführt, die zum Antreiben des Fahrzeugs ausgebildet ist. Die Druckbehälter können sich in ihrer Größe bzw. in ihrem Volumen unterscheiden. Auch die Entnahme von Brennstoff während des Betriebes des Fahrzeugs aus den Druckbehältern kann unterschiedlich sein. Zu Beginn eines Befüllungsvorgangs der Druckbehälter, bei denen die Druckbehälter von einer (einzigen) Befüllungsanlage (z.B. einer Tankstelle) bzw. einer (einzigen) Befüllungsquelle mit Brennstoff gleichzeitig und gleichlang befüllt werden, kann der Brennstoff in den Druckbehälter zueinander unterschiedliche Temperaturen und/oder Drücke aufweisen. Somit entwickeln sich die Temperaturen und Drücke in den Druckbehältern sehr unterschiedlich. Da der Befüllungsvorgang beendet wird, sobald der Zielbetankungsdruck in einem bzw. einem ersten der Druckbehälter erreicht wurde, können unter ungünstigen Umständen die anderen Druckbehälter nicht vollständig (d.h. bis zu dem Zielbetankungsdruck) befüllt worden sein. Somit können unter ungünstigen Umständen einige Druckbehälter des Druckbehältersystems und somit das Druckbehältersystem insgesamt weniger als den maximalen Befüllungszustand (state of charge) aufweisen. Folglich wird unter ungünstigen Umständen bei dem Befüllungsvorgang nicht soviel Brennstoff wie möglich in das Druckbehältersystem eingebracht.

Hochdruckgasbehältersysteme (auch "CGH2-Systeme" genannt) sind ausgebildet, bei Umgebungstemperaturen Brennstoff dauerhaft bei einem Druck von über ca. 350 barü (= Überdruck gegenüber dem Atmosphärendruck), ferner bevorzugt von über ca. 500 barü und besonders bevorzugt von über ca. 700 barü zu speichern. Kryogene Druckbehältersysteme (auch "CcH2-Systeme" genannt) sind aus dem Stand der Technik bekannt. Beispielsweise offenbart die EP 1 546 601 B1 ein solches System. Die DE 10 2012 208821 A1 und WO 2012/038039 A1 gehören zum vorbekannten Stand der Technik.

Es ist eine bevorzugte Aufgabe der hier offenbarten Technologie, zumindest einige Nachteile der vorbekannten Lösungen zu verringern oder zu beheben. Weitere bevorzugte Aufgaben können sich aus den vorteilhaften Effekten der hier offenbarten Technologie ergeben. Die Aufgabe(n) wird/werden gelöst durch den Gegenstand des Patentanspruchs 1 der unabhängigen Patentansprüche und durch den Gegenstand des Patentanspruch 8 der unabhängigen Patentansprüche. Die abhängigen Ansprüche stellen bevorzugte Ausgestaltungen dar.

Insbesondere wird die Aufgabe durch ein Verfahren zum Einstellen der Temperatur und/oder des Drucks von Brennstoff in mehreren Druckbehältern eines Fahrzeugs auf jeweils einen Temperatursollwert und/oder jeweils einen Drucksollwert vor einem Befüllungsvorgang der Druckbehälter gelöst, folgende Schritte umfassend: Entnehmen von Brennstoff aus einem ersten Druckbehälter, wobei der Brennstoff in dem ersten Druckbehälter eine erste Temperatur und einen ersten Druck aufweist, zum Annähern der ersten Temperatur und/oder des ersten Drucks des Brennstoffs an den Temperatursollwert und/oder an den Drucksollwert des ersten Druckbehälters, und abhängig von der Entscheidung einer Steuerungseinrichtung Zuführen des entnommenen Brennstoffs aus dem ersten Druckbehälter zu einer Brennstoffumsetzvorrichtung zum Antreiben des Fahrzeugs, oder in einen zweiten Druckbehälter, wobei der Brennstoff in dem zweiten Druckbehälter eine zweite Temperatur und einen zweiten Druck aufweist, zum Annähern der zweiten Temperatur und/oder des zweiten Drucks des Brennstoffs an den Temperatursollwert und/oder an den Drucksollwert des zweiten Druckbehälters, wobei die Temperatursollwerte und/oder die Drucksollwerte der Druckbehälter derart bestimmt werden, dass ohne Überschreiten des jeweiligen maximalen Betriebsdrucks und der jeweiligen maximalen Betriebstemperatur des jeweiligen Druckbehälters die Menge des durch einen gleichzeitig und gleichlang durchgeführten Befüllungsvorgang der Druckbehälter eingebrachten Brennstoffs aus einer einzigen Befüllungsquelle möglichst hoch ist.

Ein Vorteil hiervon ist, dass mehr Brennstoff bzw. eine große Menge an Brennstoff bei einem Befüllungsvorgang in das Druckbehältersystem eingebracht werden kann. Somit erhöht sich die Reichweite des Fahrzeugs.

Die Schritte des Verfahrens können durchgeführt werden, wenn die Steuerungseinrichtung erkennt, dass ein Befüllungsvorgang der Druckbehälter bevorsteht. Ein Vorteil hiervon ist, dass mehr Brennstoff bzw. eine große Menge an Brennstoff bei einem Befüllungsvorgang in das Druckbehältersystem eingebracht werden kann, ohne eine Wartezeit an der Befüllungsquelle in Kauf nehmen zu müssen, in der das Fahrzeug an der Befüllungsquelle steht und auf das Einstellen der Temperaturen und/oder Drücke durch Überströmen aus einem Druckbehälter in den anderen gewartet werden muss.

Die Temperatursollwerte und/oder die Drucksollwerte der Druckbehälter können auf Basis von Kennlinienfeldern für die Druckbehälter bestimmt werden, wobei die Kennlinienfelder jeweils mehrere Kennlinien für die Temperatur des Brennstoffs abhängig vom Druck des Brennstoffs für unterschiedliche Initialbedingungen des Brennstoffs in den jeweiligen Druckbehältern bei Beginn des Befüllungsvorgangs der Druckbehälter mit Brennstoff aus einer einzigen Befüllungsquelle aufweist. Hierdurch lassen sich technisch einfach und mit geringer Rechenleistung die Temperaturen und/oder Drücke der jeweiligen Druckbehälter bestimmen, bei denen beim Befüllungsvorgang besonders viel Brennstoff in das Druckbehältersystem eingebracht werden kann. Jeder Druckbehälter kann somit ein zugehöriges Kennlinienfeld aufweisen. Die Initialbedingungen des Brennstoffs in den Druckbehältern umfassen die Temperatur, den Druck und die Menge und/oder die Dichte des Brennstoffs in dem jeweiligen Druckbehälter.

Die Temperatursollwerte und/oder die Drucksollwerte der Druckbehälter können auf Basis mehrerer Kennlinienfeldgruppen für verschiedene Temperaturen des zu befüllenden Brennstoffs und/oder verschiedene Temperaturen des jeweiligen Druckbehälters bestimmt werden, wobei jede Kennlinienfeldgruppe mehrere Kennlinienfelder für die Temperatur des Brennstoffs abhängig vom Druck des Brennstoffs für die verschiedenen Druckbehälter bei dem Befüllungsvorgang der Druckbehälter mit Brennstoff aus einer einzigen Befüllungsquelle umfasst. Vorteilhaft hieran ist, dass durch die Berücksichtigung der weiteren Variablen die Temperatursollwerte und/oder Drucksollwerte der Druckbehälter noch genauer technisch einfach bestimmt werden können, so dass noch mehr Brennstoff in das Druckbehältersystem beim Befüllungsvorgang eingebracht werden kann.

Bei der Bestimmung der Temperatursollwerte und/oder der Drucksollwerte der Druckbehälter können Druckverluste auf dem Weg von der Betankungskupplung des Fahrzeugs zum Verbinden der Druckbehälter mit der Befüllungsquelle zu dem jeweiligen Druckbehälter berücksichtigt werden. Hierdurch kann der Menge an eingebrachten Brennstoff in die Druckbehälter noch weiter gesteigert werden.

Die Temperatursollwerte und/oder die Drucksollwerte in den mehreren Druckbehältern können abhängig von Eigenschaften der Befüllungsanlage, mittels der geplant ist, die Druckbehälter zu befüllen, insbesondere abhängig von der Temperatur des Brennstoffs in der Befüllungsanlage und/oder dem maximalen Betankungsenddruck der Befüllungsanlage, bestimmt werden. Ein Vorteil hiervon ist, dass die Menge an Brennstoff, die beim Befüllungsvorgang in das Druckbehältersystem eingebracht werden kann, weiter gesteigert wird. Die Norm SAE J2600_201510, veröffentlicht am 21. Oktober 2015, beschreibt die Temperatur des in der Tankstelle bzw. Befüllungsanlage bzw. Befüllungsquelle vorgekühlten Brennstoffs und welche Druckrampen (abhängig von Temperatur und Fahrzeugdaten wie Druck des Brennstoffs, Temperatur des Brennstoffs in den Druckbehältern des Fahrzeugs, Speichervolumen der Druckbehälter und Inhalt der Druckbehälter) der Tankstelle bzw. Befüllungsanlage zum Befüllen der Druckbehälter gewählt werden. Somit ist es ausreichend, die Umgebungstemperatur zu erfassen, um die Druckrampe, mit der die Befüllungsanlage (z.B. der Tankstelle) die Druckbehälter betankt bzw. befüllt, zu bestimmen. Abhängig von dieser Betankungsrampe und den fahrzeugeigen Daten können die Zieltemperaturen und Zieldrücke am Ende der Betankung berechnet (oder über Kennfelder bestimmt) werden.

Die Steuerungseinrichtung kann die Entscheidung, ob der dem ersten Druckbehälter entnommene Brennstoff der Brennstoffumsetzvorrichtung oder dem zweiten Druckbehälter zugeführt wird, abhängig davon treffen, ob genügend Zeit bis zum geplanten Befüllungsvorgang der Druckbehälter verbleibt, um allein durch eine gezielte Entnahme von Brennstoff aus dem oder den Druckbehältern, deren Temperaturen und/oder Drücke nicht bereits den jeweiligen Temperatursollwerten und/oder Drucksollwerten entspricht, und Zuführen des Brennstoffs zu der Brennstoffumsetzvorrichtung die Temperaturen und/oder die Drücke der Druckbehälter an die jeweiligen Temperatursollwerte und/oder Drucksollwerte der Druckbehälter anzugleichen. Hierdurch lässt sich ein Überströmen von Brennstoff aus einem Druckbehälter in den anderen Druckbehälter unter Umständen vermeiden.

Insbesondere wird die Aufgabe durch ein Druckbehältersystem in einem Fahrzeug, umfassend mehrere Druckbehälter und eine Steuerungseinrichtung, gelöst, wobei die Druckbehälter zum Speichern eines Brennstoffs ausgebildet sind und über Ventile miteinander sowie mit einer Brennstoffumsetzvorrichtung fluidverbunden sind, wobei die Steuerungseinrichtung derart zum Öffnen und/oder Schließen der Ventile ausgebildet ist, dass Brennstoff aus einem ersten Druckbehälter, wobei der Brennstoff in dem ersten Druckbehälter eine erste Temperatur und einen ersten Druck aufweist, entnehmbar ist,
und dass der entnommene Brennstoff aus dem ersten Druckbehälter zu einer Brennstoffumsetzvorrichtung, oder in einen zweiten Druckbehälter, wobei der Brennstoff in dem zweiten Druckbehälter eine zweite Temperatur und einen zweiten Druck aufweist, zugeführt wird, wobei die Steuerungseinrichtung derart ausgebildet ist, dass die Temperaturen und/oder die Drücke des Brennstoffs in den mehreren Druckbehältern mittels der Steuerungseinrichtung auf jeweils einen Temperatursollwert und/oder jeweils einen Drucksollwert vor einem Befüllungsvorgang der Druckbehälter derart einstellbar sind, dass in den mehreren Druckbehältern ohne Überschreiten des maximalen Betriebsdrucks und der jeweiligen maximalen Betriebstemperatur des jeweiligen Druckbehälters die Menge des durch einen gleichzeitig und gleichlang durchgeführten Befüllungsvorgang der Druckbehälter eingebrachten Brennstoffs aus einer einzigen Befüllungsquelle möglichst hoch ist. Ein Vorteil hiervon ist, dass mehr Brennstoff bzw. eine große Menge an Brennstoff bei einem Befüllungsvorgang in das Druckbehältersystem eingebracht werden kann. Somit erhöht sich die Reichweite des Fahrzeugs.

Die Steuerungseinrichtung kann derart ausgebildet sein, dass die Steuerungseinrichtung die Entscheidung, ob der dem ersten Druckbehälter entnommene Brennstoff der Brennstoffumsetzvorrichtung oder dem zweiten Druckbehälter zugeführt wird, abhängig davon trifft, ob genügend Zeit bis zum geplanten Befüllungsvorgang der Druckbehälter verbleibt, um allein durch eine gezielte Entnahme von Brennstoff aus dem oder den Druckbehältern, deren Temperaturen und/oder Drücke nicht bereits den jeweiligen Temperatursollwerten und/oder Drucksollwerten entspricht, und Zuführen des Brennstoffs zu der Brennstoffumsetzvorrichtung die Temperaturen und/oder die Drücke der Druckbehälter an die jeweiligen Temperatursollwerte und/oder Drucksollwerte der Druckbehälter anzugleichen. Hierdurch lässt sich ein Überströmen von Brennstoff aus einem Druckbehälter in den anderen Druckbehälter unter Umständen vermeiden.

Die Steuerungseinrichtung kann derart ausgebildet sein, dass die Steuerungseinrichtung die Temperatursollwerte und/oder die Drucksollwerte der Druckbehälter auf Basis von Kennlinienfeldern bestimmt, wobei die Kennlinienfelder jeweils mehrere Kennlinien für die Temperatur des Brennstoffs abhängig vom Druck des Brennstoffs für unterschiedliche Initialbedingungen des Brennstoffs in den jeweiligen Druckbehältern bei Beginn eines Befüllungsvorgangs der Druckbehälter mit Brennstoff aus einer einzigen Befüllungsquelle aufweist. Hierdurch lassen sich technisch einfach und mit geringer Rechenleistung die Temperaturen und/oder Drücke der Druckbehälter bestimmen, bei denen beim Befüllungsvorgang besonders viel Brennstoff in das Druckbehältersystem eingebracht werden kann. Jeder Druckbehälter kann somit ein Kennlinienfeld aufweisen. Die Initialbedingungen des Brennstoffs in den Druckbehältern umfassen die Temperatur, den Druck und die Menge und/oder die Dichte des Brennstoffs in dem jeweiligen Druckbehälter.

Der Brennstoff kann ein (bei Standarddruck von 1,000 bar und Standardtemperatur von 0 °C) gasförmiger Brennstoff, insbesondere Wasserstoff, sein.

Der Brennstoffumsetzvorrichtung wird stets nur maximal soviel Brennstoff zugeführt, wie diese benötigt.

Die hier offenbarte Technologie betrifft u.a. ein Druckbehältersystem (en: Compressed hydrogen storage system (=CHS-System)) zur Speicherung von unter Umgebungsbedingungen gasförmigen Brennstoff. Ein solcher Druckbehälter ist insbesondere ein in ein Kraftfahrzeug eingebauter bzw. einbaubarer Druckbehälter. Der Druckbehälter kann in einem Kraftfahrzeug eingesetzt werden, das beispielsweise mit komprimiertem ("Compressed Natural Gas" = CNG) oder verflüssigtem (LNG) Erdgas oder mit Wasserstoff betrieben wird. Der Druckbehälter kann beispielsweise ein kryogener Druckbehälter (= CcH2) oder ein Hochdruckgasbehälter (= CGH2) sein. Hochdruckgasbehälter sind ausgebildet, im Wesentlichen bei Umgebungstemperaturen Brennstoff (z.B. Wasserstoff) dauerhaft bei einem max. Betriebsdruck (auch maximum operating pressure oder MOP genannt) von über ca. 350 barü (= Überdruck gegenüber dem Atmosphärendruck), ferner bevorzugt von über ca. 500 barü und besonders bevorzugt von über ca. 700 barü zu speichern. Ein kryogener Druckbehälter ist insbesondere geeignet, den Brennstoff bei Temperaturen zu speichern, die deutlich unter der Betriebstemperatur (gemeint ist der Temperaturbereich der Fahrzeugumgebung, in dem das Fahrzeug betrieben werden soll) des Kraftfahrzeuges liegen, beispielsweise mind. 50 Kelvin, bevorzugt mindestens 100 Kelvin bzw. mindestens 150 Kelvin unterhalb der Betriebstemperatur des Kraftfahrzeuges (i.d.R. ca. - 40°C bis ca. +85°C).

Die hier offenbarte Technologie wird nun anhand der Figuren erläutert. Es zeigen:
- Fig. 1: eine schematische Ansicht des hier offenbarten Druckbehältersystems; und
- Fig. 2: ein Druck-Temperatur-Diagramm.

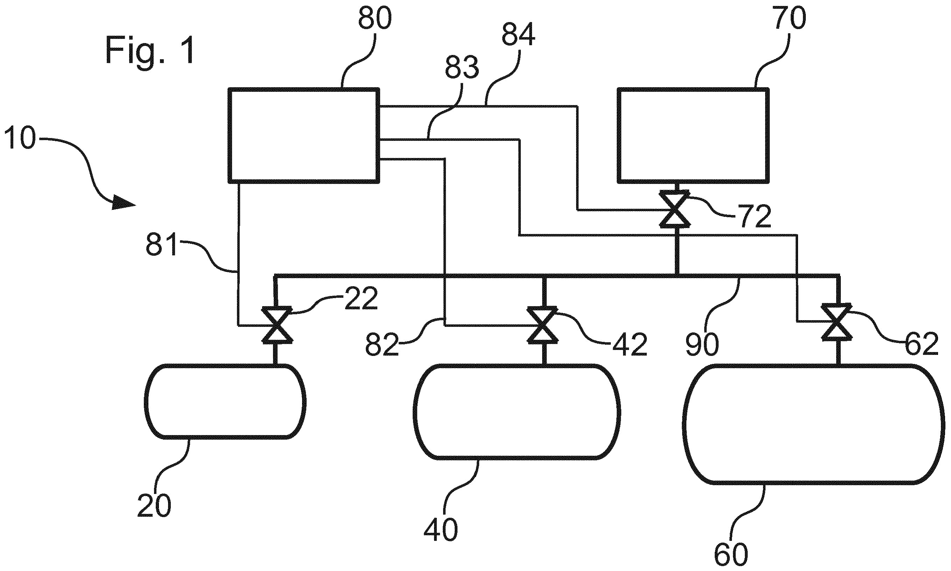

Fig. 1 zeigt eine schematische Ansicht des hier offenbarten Druckbehältersystems 10. Das Druckbehältersystem 10 umfasst einen ersten Druckbehälter 20, einen zweiten Druckbehälter 40 und einen dritten Druckbehälter 60. Das Druckbehältersystem 10 kann zwei, drei, vier, fünf oder mehr als fünf Druckbehälter umfassen. Die drei Druckbehälter 20, 40, 60 weisen unterschiedlich große Volumina auf, d.h. es stehen jeweils unterschiedliche große Räume zur Speicherung des Brennstoffs bereit. Vorstellbar ist auch, dass die Volumina der Druckbehälter 20, 40, 60 jeweils gleich groß ist.

Der Brennstoff kann CGH₂ oder CNG sein.

Das Druckbehältersystem 10 ist in einem Fahrzeug, z.B. einem PKW, LKW, einem Omnibus, einem Wasserfahrzeug oder Luftfahrzeug angeordnet. Der Brennstoff in dem Druckbehältersystem 10 wird aus den Druckbehältern 20, 40, 60 einer Brennstoffumsetzvorrichtung (nicht gezeigt) zugeführt, die zum Antreiben des Fahrzeugs ausgebildet ist. Die Brennstoffumsetzvorrichtung kann, wenn der Brennstoff Wasserstoff ist, eine Brennstoffzelle 70 sein.

Jeder der Druckbehälter 20, 40, 60 weist jeweils ein Tankabsperrventil 22, 42, 62 auf, mittels dem der Zufluss und Abfluss von Brennstoff aus dem Druckbehälter 20, 40, 60 gesperrt werden kann. Die Druckbehälter 20, 40, 60 sind über eine Fluidleitung 90 miteinander fluidverbunden. Die Druckbehälter 20, 40, 60 sind zudem durch die Fluidleitung 90 mit einer Brennstoffzelle 70 (oder allgemein gesagt mit einer Brennstoffumsetzvorrichtung) fluidverbunden. Der Zufluss von Brennstoff von den Druckbehältern 20, 40, 60 ist über ein Brennstoffzellenventil 72 sperrbar.

Die drei Druckbehälterabsperrventile 22, 42, 62 und das Brennstoffzellenventil 72 sind jeweils über eine Steuerleitung 80-84 mit einer Steuerungseinrichtung 80 des Druckbehältersystems 10 verbunden. Die Steuerungseinrichtung 80 kann die Ventile 22, 42, 62, 72 jeweils öffnen und schließen. Die Steuerungseinrichtung 80 kann somit durch entsprechendes Öffnen und Schließen der Ventil 22, 42, 62, 72 Brennstoff aus einem oder mehreren Druckbehältern 20, 40, 60 in einen oder mehrere andere Druckbehälter 20, 40, 60 strömen lassen bzw. zuführen oder der Brennstoffzelle 70 zuführen.

Die Steuerungseinrichtung 80 erfasst die Temperaturen und Drücke des Brennstoffs in jedem der Druckbehälter 20, 40, 60 sowie die Menge an Brennstoff in jedem der Druckbehälter 20, 40, 60 bzw. die Dichte des Brennstoffs in jedem der Druckbehälter 20, 40, 60. Zudem erfasst die Steuerungseinrichtung 80 die Umgebungstemperatur und/oder die Temperatur der Druckbehälter 20, 40, 60. Darüber hinaus ist in der Steuerungseinrichtung 80 gespeichert, wie groß die Druckverluste des Brennstoffs von der Betankungskupplung des Druckbehältersystems 10, mittels der das Druckbehältersystem 10 mit einer Befüllungsanlage (Tankstelle) bzw. einer Befüllungsquelle verbunden wird, zu dem jeweiligen Druckbehälter 20, 40, 60 sind. Auch der jeweilige maximale Betriebsdruck des jeweiligen Druckbehälters 20, 40, 60 und das jeweilige Volumen bzw. Innenvolumen bzw. Speichervolumen des Druckbehälters 20, 40, 60, das zur Speicherung des Brennstoffs dient, sind in der Steuerungseinrichtung 80 gespeichert. Vorstellbar ist auch, dass diese Informationen extern, d.h. außerhalb der Steuerungseinrichtung 80 gespeichert sind, und die Steuerungseinrichtung 80 auf diese Informationen zugreifen kann.

Die Steuerungseinrichtung 80 steuert die Druckbehälterventile 22, 42, 62 und das Brennstoffzellenventil 72 vor dem Beginn eines Befüllungsvorgangs bzw. Betankungsvorgangs derart, dass in den Druckbehältern 20, 40, 60 jeweils optimale Drücke und/oder Temperaturen vorhanden sind bzw. stellt die optimalen Drücke (Drucksollwerte) und/oder Temperaturen (Temperatursollwerte) ein. Bei dem Befüllungsvorgang wird Brennstoff aus einer einzigen Befüllungsquelle (z.B. einer Tankstelle bzw. Befüllungsanlage) dem Druckbehältersystem 10 und somit den Druckbehältern 20, 40, 60 zugeführt. Eine einzige Befüllungsquelle bedeutet, dass die Druckbehälter 20, 40, 60 z.B. mittels eine Betankungskupplung mit einer Befüllungsanlage verbunden werden. Auch wenn die Befüllungsanlage mehrere Druckbehälter 20, 40, 60 aufweist, stellt die Befüllungsanlage eine einzige Befüllungsquelle dar, da der Brennstoff aus der Befüllungsanlage in alle Druckbehälter 20, 40, 60 zugeführt wird.

Der Brennstoff wird den Druckbehältern 20, 40, 60 gleichzeitig und gleich lange (das Zeitintervall zwischen Start des Befüllungsvorgangs und Ende des Befüllungsvorgangs ist gleichgroß) zugeführt. Der Befüllungsvorgang (aller Druckbehälter 20, 40, 60) wird beendet, wenn der Druck des Brennstoffs im Druckbehältersystem bzw. in einem ersten Druckbehälter den maximalen Betankungsdruck bzw. Zielbetankungsdruck gemäß der Norm SAE J2600_201510 erreicht hat oder das Druckbehältersystem bzw. das Fahrzeug der Befüllungsanlage meldet, dass der Ziel-Befüllungsgrad (state of charge; SOC) der Druckbehälter erreicht wurde (oder der Benutzer den Befüllungsvorgang manuell abbricht). Zu diesem Zeitpunkt hat jedoch der Brennstoff in den anderen Druckbehältern 20, 40, 60 in der Regel nicht den Zielbetankungsdruck bzw. den Ziel-Befüllungsgrad erreicht, da beim Starten des Befüllungsvorgangs der Brennstoff in den Druckbehältern 20, 40, 60 unterschiedliche Temperaturen und/oder Drücke aufwies.

Der Zielbetankungsdruck (nach der SAE-Norm) wird für das Druckbehältersystem insgesamt festgelegt. Während des Befüllungsvorgangs wird ein Druckbehälter 20, 40, 60 den Zielbetankungsdruck zuerst erreichen und der Befüllungsvorgang wird beendet. Abhängig von den Druckverlusten zu den einzelnen Druckbehältern 20, 40, 60 weisen die anderen Druckbehälter 20, 40, 60 den gleichen Druck auf oder weisen leichte Abweichungen hiervon (in der Regel nach unten) auf, jedoch haben die anderen Druckbehälter 20, 40, 60 eine andere Temperatur und somit einen anderen Befüllungsgrad bzw. Dichte an Brennstoff. Die Temperaturentwicklung in den Druckbehältern 20, 40, 60 ist von der thermischen Masse der Druckbehälter 20, 40, 60 und dem individuellen Verhalten bezüglich des Wärmeaustauschs mit der Umgebung (aufgrund von Bauraum und Materialstärke der Wand bzw. der Wände der Druckbehälter 20, 40, 60) abhängig.

Die Temperatur und/oder der Drucks des Brennstoffs in den Druckbehältern 20, 40, 60 wird nun jeweils mittels Überströmen bzw. Zuführen von Brennstoff aus einem oder mehreren Druckbehältern 20, 40, 60 in einen anderen oder mehrere andere Druckbehälter 20, 40, 60 oder durch gezieltes Entnehmen von Brennstoff aus einem Druckbehälter 20, 40, 60 und Zuführen des Brennstoffs zu der Brennstoffumsetzvorrichtung (z.B. Brennstoffzelle 70) einem Temperatursollwert und/oder einem Drucksollwert für diesen Druckbehälter 20, 40, 60 angenähert. Es wird solange einem Druckbehälter 20, 40, 60 Brennstoff entnommen (und einem anderen Druckbehälter 20, 40, 60 zugeführt oder verbraucht), bis die Temperatur und/oder der Druck des Brennstoffs in dem jeweiligen Druckbehälter 20, 40, 60 dem Temperatursollwert und/oder Drucksollwert des jeweiligen Druckbehälters 20, 40, 60 entspricht bzw. gleich diesem ist oder bis der Betankungsvorgang vom Benutzer begonnen wird.

Die Temperatursollwerte und/oder Drucksollwerte für den jeweiligen Druckbehälter 20, 40, 60 werden derart bestimmt, dass am Ende eines Befüllungvorgangs, bei dem alle Druckbehälter 20, 40, 60 gleichzeitig und gleichlang mit dem gleichen Brennstoff (gleiche Temperatur und gleicher Druck) befüllt werden, die Menge an eingebrachtem Brennstoff in die Druckbehälter 20, 40, 60 möglichst hoch ist. Somit wird besonders viel Brennstoff in dem Druckbehältersystem 10 gespeichert. Eine möglichst hohe Brennstoffdichte wird angestrebt.

Möglichst viel Brennstoff in das Druckbehältersystem bzw. in die Druckbehälter 20, 40, 60 einzubringen bedeutet, dass der durchschnittliche Befüllungsgrad der Druckbehälter 20, 40, 60 gewichtet nach Volumen bzw. Innenvolumen bzw. Speichervolumen der Druckbehälter 20, 40, 60 möglichst hoch ist, d.h. der Befüllungsgrad von Druckbehältern 20, 40, 60 mit einem großen Volumen bzw. Innenvolumen bzw. Speichervolumen zur Speicherung von Brennstoff wiegt stärker als der Befüllungsgrad von Druckbehälter 20, 40, 60 mit einem geringen Volumen. Die Menge an eingebrachtem Brennstoff kann durch die erfasste Dichte und erfasste Temperatur (sowie die Volumina) der einzelnen Druckbehälter 20, 40, 60 bestimmt werden.

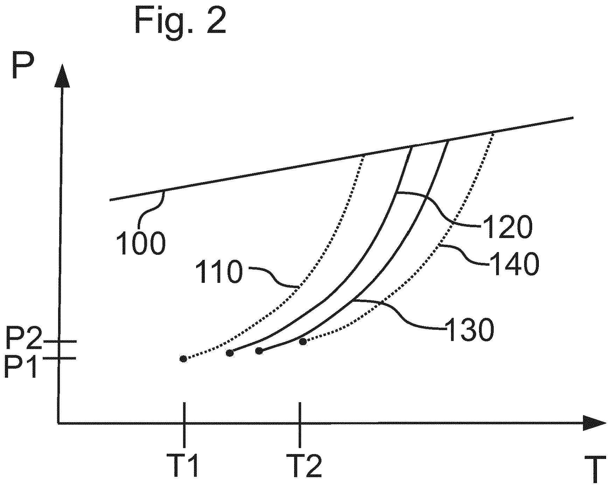

Fig. 2 zeigt ein Druck-Temperatur-Diagramm, wobei die Temperatur des Brennstoffs auf der x-Achse angegeben ist und der Druck des Brennstoffs (in dem jeweiligen Druckbehälter 20, 40, 60) auf der y-Achse angegeben ist.

Jedes Kennlinienfeld zeigt den Verlauf der Temperatur und des Drucks des Brennstoffs für einen Druckbehälter 20, 40, 60. Somit weist ein Druckbehältersystem mit fünf Druckbehältern z.B. fünf Kennlinienfelder auf. In Fig. 2 sind zur besseren Erkennbarkeit bzw. zum besseren Verständnis Kennlinien aus zwei Kennlinienfelder (nämlich einem Kennlinienfeld für den ersten Druckbehälter 20 und einem Kennlinienfeld für den zweiten Druckbehälter 40) eingezeichnet.

Die Kennlinien in jedem Kennlinienfeld geben den Verlauf der Temperatur relativ zum Druck für unterschiedliche Initialbedingungen des Brennstoffs in den Druckbehältern 20, 40, 60 wider.

Der maximale Betriebsdruck (MOP max. operation pressure) ist für alle Druckbehälter 20, 40, 60 gleich groß. Vorstellbar ist, dass der maximale Betriebsdruck der verschiedenen Druckbehälter 20, 40, 60 unterschiedlich groß ist. Gemäß der Norm SAE J2600_201510 liegt der Zielbetankungsdruck bei 875 bar (MOP max. operation pressure) am Ende der Betankung bzw. Befüllung bei 85 °C (Tₘₐₓ). Die Befüllungsgradlinie 100, bei der einer vollständigen Befüllung eines bzw. der Druckbehälter 20, 40, 60 entspricht, ist mit einer Linie in Fig. 2 eingezeichnet.

Vier Kennlinien 110, 120, 130, 140 die den Verlauf der Druck und der Temperatur des Brennstoffs beim Befüllen der Druckbehälter 20, 40, 60 mit Brennstoff aus einer (einzigen) Brennstoffquelle (z.B. Brennstoff mit einer Temperatur und einem Druck von einer Tankstelle) wiedergeben. Zunächst weist der erste Druckbehälter 20 eine Temperatur T1 und einen Druck P1 auf, während der zweite Druckbehälter 40 eine Temperatur T2, die höher als Temperatur T1 ist, und einen Druck P2, der höher ist als der Druck P2, auf. Wenn nun die beiden Druckbehälter 20, 40 befüllt würden, würde der Befüllungsvorgang enden, wenn der Brennstoff in dem ersten Druckbehälter 20 den Zielbetankungsdruck erreicht hat oder der Betankungsanlage von dem Druckbehältersystem ein Befüllungsgrad bzw. SOC von 100% gemeldet wird. Zu diesem Zeitpunkt hätte der erste Druckbehälter 20 auch den maximalen Befüllungsgrad (=100%) erreicht. Der Befüllungsgrad des zweiten Druckbehälters 40 wäre jedoch unterhalb des maximalen Werts.

Daher steuert die Steuerungseinrichtung 80 die Ventile 22, 42, 62, 72 derart, dass Brennstoff vor dem Befüllungsvorgang aus dem zweiten Druckbehälter 40 in den ersten Druckbehälter 20 strömt. Hierdurch wird die Kennlinie 110 des ersten Druckbehälters 20 (gestrichelt dargestellt) nach rechts oben verschoben (da Druck und Temperatur in dem ersten Druckbehälter 20 steigen) und die Kennlinie 140 des zweiten Druckbehälters 40 (gestrichelt dargestellt) nach links unten (da Druck und Temperatur in dem zweiten Druckbehälter 40 sinken). Dann wird ein neuer Zielbetankungsdruck nach der SAE-Norm ermittelt. Nun (bei der nunmehr geltenden Kennlinie 120 des ersten Druckbehälters 20 und der nunmehr geltenden Kennlinie 130 des zweiten Druckbehälters 40) erreicht beim neu ermittelten Zielbetankungsdruck der Befüllungsgrad des ersten Druckbehälters 20 den maximalen Wert (100%) oder einen Wert nahe des maximalen Werts (100%). Der Befüllungsgrad des zweiten Druckbehälters 40 beim Beenden des Befüllungsvorgangs ist nun höher. Der durchschnittliche Befüllungsgrad der Druckbehälter 20, 40 (gewichtet nach den Volumen der Druckbehälter 20, 40) ist höher. Folglich kann mehr Brennstoff bei dem Befüllungsvorgang in das Druckbehältersystem 10 bzw. die Druckbehälter 20, 40 eingebracht werden.

Die Steuerungseinrichtung 80 kann die Temperaturen und/oder die Drücke des Brennstoffs in den Druckbehältern 20, 40, 60 während der Entnahme entsprechend steuern bzw. einstellen bzw. an die Temperatursollwerte und/oder Drucksollwerte angleichen, wenn die Steuerungseinrichtung 80 erkennt, dass ein Befüllungsvorgang (unmittelbar) bevorsteht. Dies kann durch eine Eingabe des Fahrers (ein Betankungswunschtaster wird betätigt, der das Fahrzeug für eine Betankung vorbereitet) und/oder prädiktive Betankungswunscherkennung, z.B. durch Daten vom Navigationssystem, historisches Kundenverhalten, Auswertung von Umgebungsbildern (Tankstellenerkennung), festgestellt werden. Durch Einstellen der Temperaturen und/oder Drücke des Brennstoffs in den Druckbehältern 20, 40, 60 vor Erreichen bzw. bei Erreichen der Befüllungsanlage wird Zeit eingespart, da auf das Einstellen der Temperaturen und/oder Drücke bzw. das Angleichen der Temperaturen und/oder Drücke an die Temperatursollwerte und/oder Drucksollwerte nicht gewartet werden muss. Zudem wird die Geräuschbelastung des Fahrers bzw. Benutzers mit Geräuschen, die beim Überströmen von Brennstoff aus einem Druckbehälter 20, 40, 60 in den anderen Druckbehälter 20, 40, 60 entstehen, reduziert.

Bei der Bestimmung der angestrebten bzw. einzustellenden Temperatursollwerte und/oder Drucksollwerte kann die Umgebungstemperatur, die Temperatur des Brennstoffs aus der Befüllungsquelle, unterschiedliche Arten von Befüllungsanlagen (unterschiedliche Temperaturen des Brennstoffs, unterschiedliche erreichbare Betankungsenddrücke), unterschiedliche Volumina der Druckbehälter 20, 40, 60, die Temperatur der Druckbehälter 20, 40, 60 selbst und/oder Druckverluste auf dem Weg von der Betankungskupplung des Fahrzeugs zum Verbinden der Druckbehälter 20, 40, 60 mit der Befüllungsanlage zu dem jeweiligen Druckbehälter 20, 40, 60 berücksichtigt werden. Für die verschiedenen genannten Variablen können ebenfalls unterschiedliche Kennlinienfeldgruppen vorhanden sein.

Die Befüllungsanlage (z.B. die Tankstelle) bzw. Befüllungsquelle kann der Steuerungseinrichtung 80 die aktuellen und/oder die beim Zeitpunkt des erwarteten Eintreffens des Fahrzeugs an der Befüllungsanlage bzw. Befüllungsquelle zu erwartenden Konditionen der Befüllungsanlage bzw. Befüllungsquelle (z.B. tatsächliche Temperatur des Brennstoffs, die von den Vorgaben der Norm, -20 °C oder -40 °C, abweichen kann, erreichbare Betankungsenddrücke) übermitteln (z.B. mittels Mobilfunk und/oder einer Internetverbindung), so dass diese Werte bei der Bestimmung der Temperatursollwerte und/oder Drucksollwerte berücksichtigt werden.

Die zu berücksichtigenden Werte können durch verschiedenen Kennlinienfelder bzw. Kennlinienfeldgruppen abgedeckt werden. Je nach Kondition der Befüllungsanlage bzw. Befüllungsquelle wird z.B. eine andere Kennlinienfeldgruppe verwendet. Jede Kennlinienfeldgruppe umfasst mehrere Kennlinienfelder, nämlich jeweils ein Kennlinienfeld pro Druckbehälter 20, 40, 60. Jedes Kennlinienfeld umfasst Kennlinien, die die Entwicklung von Druck und Temperatur, für verschiedene Mengen an Brennstoff in dem jeweiligen Druckbehälter bzw. verschiedene Initialbedingungen (Temperatur, Druck und Menge an Brennstoff beim Beginn des Befüllungsvorgangs) der Druckbehälter angeben.

Anstatt auf Basis von Kennlinienfeldern bzw. Kennlinienfeldgruppen bestimmt zu werden, können die Temperatursollwerte und/oder Drucksollwerte der jeweiligen Druckbehälter auch mittels Formeln berechnet werden. Die Berechnung hierfür kann in dem Fahrzeug oder außerhalb des Fahrzeugs (z.B. auf einem Server) stattfinden.

Aus Gründen der Leserlichkeit wurde vereinfachend der Ausdruck "mindestens ein(e)" teilweise weggelassen. Sofern ein Merkmal der hier offenbarten Technologie in der Einzahl bzw. unbestimmt beschrieben ist (z.B. der/ein Steuerungseinrichtung etc.) so soll gleichzeitig auch deren Mehrzahl mit offenbart sein (z.B. die mindestens eine Steuerungseinrichtung etc.).

### Bezugszeichenliste

- 10: Druckbehältersystem
- 20: erster Druckbehälter
- 22: erstes Tankabsperrventil
- 40: zweiter Druckbehälter
- 42: zweites Tankabsperrventil
- 60: dritter Druckbehälter
- 62: drittes Tankabsperrventil
- 70: Brennstoffzelle
- 72: Brennstoffzellenabsperrventil
- 80: Steuerungseinrichtung
- 81: Steuerleitung zu erstem Tankabsperrventil
- 82: Steuerleitung zu zweitem Tankabsperrventil
- 83: Steuerleitung zu drittem Tankabsperrventil
- 84: Steuerleitung zu Brennstoffzellenabsperrventil
- 90: Fluidleitung
- 100: Befüllungsgradlinie
- 110: erste Kennlinie
- 120: zweite Kennlinie
- 130: dritte Kennlinie
- 140: vierte Kennlinie

## Patentansprüche

1. Verfahren zum Einstellen der Temperatur und/oder des Drucks von Brennstoff in mehreren Druckbehältern (20, 40, 60) eines Fahrzeugs auf jeweils einen Temperatursollwert und/oder jeweils einen Drucksollwert vor einem Befüllungsvorgang der Druckbehälter (20, 40, 60),
folgende Schritte umfassend:
Entnehmen von Brennstoff aus einem ersten Druckbehälter (20), wobei der Brennstoff in dem ersten Druckbehälter (20) eine erste Temperatur und einen ersten Druck aufweist, zum Annähern der ersten Temperatur und/oder des ersten Drucks des Brennstoffs an den Temperatursollwert und/oder an den Drucksollwert des ersten Druckbehälters (20),
und abhängig von der Entscheidung einer Steuerungseinrichtung (80) Zuführen des entnommenen Brennstoffs aus dem ersten Druckbehälter (20)
- zu einer Brennstoffumsetzvorrichtung zum Antreiben des Fahrzeugs, oder
- in einen zweiten Druckbehälter (40), wobei der Brennstoff in dem zweiten Druckbehälter (40) eine zweite Temperatur und einen zweiten Druck aufweist, zum Annähern der zweiten Temperatur und/oder des zweiten Drucks des Brennstoffs an den Temperatursollwert und/oder an den Drucksollwert des zweiten Druckbehälters (40),
wobei die Temperatursollwerte und/oder die Drucksollwerte der Druckbehälter (20, 40, 60) derart bestimmt werden, dass ohne Überschreiten des jeweiligen maximalen Betriebsdrucks und der jeweiligen maximalen Betriebstemperatur des jeweiligen Druckbehälters (20, 40, 60) die Menge des durch einen gleichzeitig und gleichlang durchgeführten Befüllungsvorgang der Druckbehälter (20, 40, 60) eingebrachten Brennstoffs aus einer einzigen Befüllungsquelle möglichst hoch ist.

2. Verfahren nach Anspruch 1, wobei
die Schritte des Verfahrens durchgeführt werden, wenn die Steuerungseinrichtung (80) erkennt, dass ein Befüllungsvorgang der Druckbehälter (20, 40, 60) bevorsteht.

3. Verfahren nach Anspruch 1 oder 2, wobei
die Temperatursollwerte und/oder die Drucksollwerte der Druckbehälter (20, 40, 60) auf Basis von Kennlinienfeldern für die Druckbehälter (20, 40, 60) bestimmt werden, wobei die Kennlinienfelder jeweils mehrere Kennlinien für die Temperatur des Brennstoffs abhängig vom Druck des Brennstoffs für unterschiedliche Initialbedingungen des Brennstoffs in den jeweiligen Druckbehältern (20, 40, 60) bei Beginn des Befüllungsvorgangs der Druckbehälter (20, 40, 60) mit Brennstoff aus einer einzigen Befüllungsquelle aufweist.

4. Verfahren nach einem der vorhergehenden Ansprüche, wobei die Temperatursollwerte und/oder die Drucksollwerte der Druckbehälter (20, 40, 60) auf Basis mehrerer Kennlinienfeldgruppen für verschiedene Temperaturen des zu befüllenden Brennstoffs und/oder verschiedene Temperaturen des jeweiligen Druckbehälters (20, 40, 60) bestimmt werden, wobei jede Kennlinienfeldgruppe mehrere Kennlinienfelder für die Temperatur des Brennstoffs abhängig vom Druck des Brennstoffs für die verschiedenen Druckbehälter (20, 40, 60) bei dem Befüllungsvorgang der Druckbehälter (20, 40, 60) mit Brennstoff aus einer einzigen Befüllungsquelle umfasst.

5. Verfahren nach einem der vorhergehenden Ansprüche, wobei bei der Bestimmung der Temperatursollwerte und/oder der Drucksollwerte der Druckbehälter (20, 40, 60) Druckverluste auf dem Weg von der Betankungskupplung des Fahrzeugs zum Verbinden der Druckbehälter (20, 40, 60) mit der Befüllungsquelle zu dem jeweiligen Druckbehälter (20, 40, 60) berücksichtigt werden.

6. Verfahren nach einem der vorhergehenden Ansprüche, wobei die Temperatursollwerte und/oder die Drucksollwerte in den mehreren Druckbehältern (20, 40, 60) abhängig von Eigenschaften der Befüllungsanlage, mittels der geplant ist, die Druckbehälter (20, 40, 60) zu befüllen, insbesondere abhängig von der Temperatur des Brennstoffs in der Befüllungsanlage und/oder dem maximalen Betankungsenddruck der Befüllungsanlage, bestimmt werden.

7. Verfahren nach einem der vorhergehenden Ansprüche, wobei die Steuerungseinrichtung (80) die Entscheidung, ob der dem ersten Druckbehälter (20) entnommene Brennstoff der Brennstoffumsetzvorrichtung oder dem zweiten Druckbehälter (40) zugeführt wird, abhängig davon trifft, ob genügend Zeit bis zum geplanten Befüllungsvorgang der Druckbehälter (20, 40, 60) verbleibt, um allein durch eine gezielte Entnahme von Brennstoff aus dem oder den Druckbehältern (20, 40, 60), deren Temperaturen und/oder Drücke nicht bereits den jeweiligen Temperatursollwerten und/oder Drucksollwerten entspricht, und Zuführen des Brennstoffs zu der Brennstoffumsetzvorrichtung die Temperaturen und/oder die Drücke der Druckbehälter (20, 40, 60) an die jeweiligen Temperatursollwerte und/oder Drucksollwerte der Druckbehälter (20, 40, 60) anzugleichen.

8. Druckbehältersystem (10) in einem Fahrzeug, umfassend mehrere Druckbehälter (20, 40, 60) und eine Steuerungseinrichtung (80),
wobei die Druckbehälter (20, 40, 60) zum Speichern eines Brennstoffs ausgebildet sind und über Ventile (22, 42, 62, 72) miteinander sowie mit einer Brennstoffumsetzvorrichtung fluidverbunden sind,
wobei die Steuerungseinrichtung (80) derart zum Öffnen und/oder Schließen der Ventile (22, 42, 62, 72) ausgebildet ist,
dass Brennstoff aus einem ersten Druckbehälter (20), wobei der Brennstoff in dem ersten Druckbehälter (20) eine erste Temperatur und einen ersten Druck aufweist, entnehmbar ist,
und dass der entnommene Brennstoff aus dem ersten Druckbehälter (20)
- zu einer Brennstoffumsetzvorrichtung, oder
- in einen zweiten Druckbehälter (40), wobei der Brennstoff in dem zweiten Druckbehälter (40) eine zweite Temperatur und einen zweiten Druck aufweist, zugeführt wird,
wobei die Steuerungseinrichtung (80) derart ausgebildet ist, dass die Temperaturen und/oder die Drücke des Brennstoffs in den mehreren Druckbehältern (20, 40, 60) mittels der Steuerungseinrichtung (80) auf jeweils einen Temperatursollwert und/oder jeweils einen Drucksollwert vor einem Befüllungsvorgang der Druckbehälter (20, 40, 60) derart einstellbar sind, dass in den mehreren Druckbehältern (20, 40, 60) ohne Überschreiten des jeweiligen maximalen Betriebsdrucks und der jeweiligen maximalen Betriebstemperatur des jeweiligen Druckbehälters (20, 40, 60) die Menge des durch einen gleichzeitig und gleichlang durchgeführten Befüllungsvorgang der Druckbehälter (20, 40, 60) aus einer einzigen Befüllungsquelle eingebrachten Brennstoffs möglichst hoch ist.

9. Druckbehältersystem (10) nach Anspruch 8, wobei die Steuerungseinrichtung (80) derart ausgebildet ist, dass die Steuerungseinrichtung (80) die Entscheidung, ob der dem ersten Druckbehälter (20) entnommene Brennstoff der Brennstoffumsetzvorrichtung oder dem zweiten Druckbehälter (40) zugeführt wird, abhängig davon trifft, ob genügend Zeit bis zum geplanten Befüllungsvorgang der Druckbehälter (20, 40, 60) verbleibt, um allein durch eine gezielte Entnahme von Brennstoff aus dem oder den Druckbehältern (20, 40, 60), deren Temperaturen und/oder Drücke nicht bereits den jeweiligen Temperatursollwerten und/oder Drucksollwerten entspricht, und Zuführen des Brennstoffs zu der Brennstoffumsetzvorrichtung die Temperaturen und/oder die Drücke der Druckbehälter (20, 40, 60) an die jeweiligen Temperatursollwerte und/oder Drucksollwerte der Druckbehälter (20, 40, 60) anzugleichen.

10. Druckbehältersystem (10) nach Anspruch 8 oder 9, wobei die Steuerungseinrichtung (80) derart ausgebildet ist, dass die Steuerungseinrichtung (80) die Temperatursollwerte und/oder die Drucksollwerte der Druckbehälter (20, 40, 60) auf Basis von Kennlinienfeldern bestimmt, wobei die Kennlinienfelder jeweils mehrere Kennlinien für die Temperatur des Brennstoffs abhängig vom Druck des Brennstoffs für unterschiedliche Initialbedingungen des Brennstoffs in den jeweiligen Druckbehältern (20, 40, 60) bei Beginn des Befüllungsvorgangs der Druckbehälter (20, 40, 60) mit Brennstoff aus einer einzigen Befüllungsquelle aufweist.

## Claims

1. Method for adjusting the temperature and/or the pressure of fuel in a plurality of pressurized containers (20, 40, 60) of a vehicle to a respective temperature setpoint and/or a respective pressure setpoint before a process of filling the pressurized containers (20, 40 60),
comprising the following steps:
extracting fuel from a first pressurized container (20), wherein the fuel in the first pressurized container (20) has a first temperature and a first pressure, to bring the first temperature and/or the first pressure of the fuel closer to the temperature setpoint and/or to the pressure setpoint of the first pressurized container (20),
and depending on the decision of a control unit (80), supplying the fuel extracted from the first pressurized container (20)
- to a fuel conversion device to power the vehicle, or
- into a second pressurized container (40), wherein the fuel in the second pressurized container (40) has a second temperature and a second pressure, to bring the second temperature and/or the second pressure of the fuel closer to the temperature setpoint and/or to the pressure setpoint of the second pressurized container (40), wherein the temperature setpoints and/or the pressure setpoints of the pressurized containers (20, 40, 60) are determined in such a way that, without exceeding the respective maximum operating pressure and the respective maximum operating temperature of the respective pressurized container (20, 40, 60), the amount of fuel introduced from a single filling source by a process of filling the pressurized containers (20, 40, 60) which is carried out at the same time and for the same length of time is as high as possible.

2. Method according to Claim 1, wherein
the steps of the method are carried out when the control unit (80) detects that a process of filling the pressurized containers (20, 40, 60) is imminent.

3. Method according to Claim 1 or 2, wherein
the temperature setpoints and/or the pressure setpoints of the pressurized containers (20, 40, 60) are determined based on characteristic curve families for the pressurized containers (20, 40, 60), wherein the characteristic curve families each have a plurality of characteristic curves for the temperature of the fuel according to the pressure of the fuel for different initial conditions of the fuel in the respective pressurized containers (20, 40, 60) at the start of the process of filling the pressurized containers (20, 40, 60) with fuel from a single filling source.

4. Method according to any of the preceding claims, wherein
the temperature setpoints and/or the pressure setpoints of the pressurized containers (20, 40, 60) are determined based on a plurality of characteristic curve family groups for different temperatures of the fuel to be filled and/or different temperatures of the respective pressurized container (20, 40, 60), wherein each characteristic curve family group includes a plurality of characteristic curve families for the temperature of the fuel according to the pressure of the fuel for the different pressurized containers (20, 40, 60) during the process of filling the pressurized containers (20, 40, 60) with fuel from a single filling source.

5. Method according to any of the preceding claims, wherein
when determining the temperature setpoints and/or the pressure setpoints of the pressurized containers (20, 40, 60), pressure losses during transport from the refueling coupling of the vehicle, for connecting the pressurized containers (20, 40, 60) to the filling source, to the respective pressurized containers (20, 40, 60) are taken into consideration.

6. Method according to any of the preceding claims, wherein
the temperature setpoints and/or the pressure setpoints in the plurality of pressurized containers (20, 40, 60) are determined according to properties of the filling system, by means of which it is planned to fill the pressurized containers (20, 40, 60), in particular according to the temperature of the fuel in the filling system and/or the maximum final refueling pressure of the filling system.

7. Method according to any of the preceding claims, wherein
the control unit (80) makes the decision as to whether the fuel extracted from the first pressurized container (20) is supplied to the fuel conversion device or to the second pressurized container (40) depending on whether enough time remains until the planned process of filling the pressurized containers (20, 40, 60) to match the temperatures and/or the pressures of the pressurized containers (20, 40, 60) to the respective temperature setpoints and/or pressure setpoints of the pressurized containers (20, 40, 60) solely by a selective extraction of fuel from the pressurized container(s) (20, 40, 60) of which the temperatures and/or pressures do not already correspond to the respective temperature setpoints and/or pressure setpoints, and supplying the fuel to the fuel conversion device.

8. Pressurized container system (10) in a vehicle, comprising a plurality of pressurized containers (20, 40, 60) and a control unit (80),
wherein the pressurized containers (20, 40, 60) are designed to store a fuel and are fluidically connected to one another and to a fuel conversion device by valves (22, 42, 62, 72),
wherein the control unit (80) is designed to open and/or close the valves (22, 42, 62, 72) in such a way that fuel can be extracted from a first pressurized container (20), wherein the fuel in the first pressurized container (20) has a first temperature and a first pressure,
and that the fuel extracted from the first pressurized container (20) is supplied
- to a fuel conversion device, or
- into a second pressurized container (40), wherein the fuel in the second pressurized container (40) has a second temperature and a second pressure,
wherein the control unit (80) is designed in such a way that the temperatures and/or the pressures of the fuel in the plurality of pressurized containers (20, 40, 60) can be adjusted by means of the control unit (80) to a respective temperature setpoint and/or a respective pressure setpoint before a process of filling the pressurized containers (20, 40, 60) in such a way that, in the plurality of pressurized containers (20, 40, 60), the amount of the fuel introduced by a process of filling the pressurized containers (20, 40, 60) from a single filling source, which is carried out at the same time and for the same length of time, is as high as possible without exceeding the respective maximum operating pressure and the respective maximum operating temperature of the respective pressurized container (20, 40, 60).

9. Pressurized container system (10) according to Claim 8, wherein
the control unit (80) is designed in such a way that the control unit (80) makes the decision as to whether the fuel extracted from the first pressurized container (20) is supplied to the fuel conversion device or to the second pressurized container (40) depending on whether enough time remains until the planned process of filling the pressurized containers (20, 40, 60) to match the temperatures and/or the pressures of the pressurized containers (20, 40, 60) to the respective temperature setpoints and/or pressure setpoints of the pressurized containers (20, 40, 60) solely by a selective extraction of fuel from the pressurized container(s) (20, 40, 60) of which the temperatures and/or pressures do not already correspond to the respective temperature setpoints and/or pressure setpoints, and supplying the fuel to the fuel conversion device.

10. Pressurized container system (10) according to Claim 8 or 9, wherein
the control unit (80) is designed in such a way that the control unit (80) determines the temperature setpoints and/or the pressure setpoints of the pressurized containers (20, 40, 60) based on characteristic curve families, wherein the characteristic curve families each have a plurality of characteristic curves for the temperature of the fuel according to the pressure of the fuel for different initial conditions of the fuel in the respective pressurized containers (20, 40, 60) at the start of the process of filling the pressurized containers (20, 40, 60) with fuel from a single filling source.

## Revendications

1. Procédé permettant de régler la température et/ou la pression d'un combustible dans plusieurs récipients sous pression (20, 40, 60) d'un véhicule à respectivement une valeur de consigne de température et/ou respectivement une valeur de consigne de pression avant une opération de remplissage des récipients sous pression (20, 40, 60), comprenant les étapes suivantes consistant à :
prélever du combustible à partir d'un premier récipient sous pression (20), le combustible dans le premier récipient sous pression (20) présentant une première température et une première pression, pour rapprocher la première température et/ou la première pression du combustible de la valeur de consigne de température et/ou de la valeur de consigne de pression du premier récipient sous pression (20),
et en fonction de la décision d'un dispositif de commande (80), acheminer le combustible prélevé du premier récipient sous pression (20)
- à un dispositif de transformation de combustible pour entraîner le véhicule, ou
- dans un deuxième récipient sous pression (40), le combustible dans le deuxième récipient sous pression (40) présentant une deuxième température et une deuxième pression, pour rapprocher la deuxième température et/ou la deuxième pression du combustible de la valeur de consigne de température et/ou de la valeur de consigne de pression du deuxième récipient sous pression (40),
les valeurs de consigne de température et/ou les valeurs de consigne de pression des récipients sous pression (20, 40, 60) étant déterminées de telle sorte que sans dépasser la pression de service maximale respective ni la température de service maximale respective du récipient sous pression (20, 40, 60) respectif, la quantité du combustible introduit par une opération de remplissage des récipients sous pression (20, 40, 60), effectuée en même temps et pendant une même durée, à partir d'une source de remplissage unique est aussi grande que possible.

2. Procédé selon la revendication 1, dans lequel les étapes du procédé sont exécutées si le dispositif de commande (80) reconnaît qu'une opération de remplissage des récipients sous pression (20, 40, 60) est imminente.

3. Procédé selon la revendication 1 ou 2, dans lequel les valeurs de consigne de température et/ou les valeurs de consigne de pression des récipients sous pression (20, 40, 60) sont déterminées sur la base de réseaux de caractéristiques pour les récipients sous pression (20, 40, 60), les réseaux de caractéristiques présentant respectivement plusieurs courbes caractéristiques pour la température du combustible en fonction de la pression du combustible pour différentes conditions initiales du combustible dans les récipients sous pression (20, 40, 60) respectifs au début de l'opération de remplissage des récipients sous pression (20, 40, 60) avec du combustible provenant d'une source de remplissage unique.

4. Procédé selon l'une quelconque des revendications précédentes, dans lequel les valeurs de consigne de température et/ou les valeurs de consigne de pression des récipients sous pression (20, 40, 60) sont déterminées sur la base de plusieurs groupes de réseaux de caractéristiques pour différentes températures du combustible à remplir et/ou différentes températures du récipient sous pression (20, 40, 60) respectif, chaque groupe de réseaux de caractéristiques comprenant plusieurs réseaux de caractéristiques pour la température du combustible en fonction de la pression du combustible pour les différents récipients sous pression (20, 40, 60) lors de l'opération de remplissage des récipients sous pression (20, 40, 60) avec du combustible provenant d'une source de remplissage unique.

5. Procédé selon l'une quelconque des revendications précédentes, dans lequel lors de la détermination des valeurs de consigne de température et/ou des valeurs de consigne de pression des récipients sous pression (20, 40, 60), des pertes de pression sur le chemin de l'accouplement de ravitaillement du véhicule, destiné à raccorder les récipients sous pression (20, 40, 60) à la source de remplissage, au récipient sous pression (20, 40, 60) respectif sont prises en compte.

6. Procédé selon l'une quelconque des revendications précédentes, dans lequel les valeurs de consigne de température et/ou les valeurs de consigne de pression dans les plusieurs récipients sous pression (20, 40, 60) sont déterminées en fonction de propriétés de l'installation de remplissage au moyen de laquelle il est prévu de remplir les récipients sous pression (20, 40, 60), en particulier en fonction de la température du combustible dans l'installation de remplissage et/ou de la pression finale de ravitaillement maximale de l'installation de remplissage.

7. Procédé selon l'une quelconque des revendications précédentes, dans lequel le dispositif de commande (80) prend la décision si le combustible prélevé du premier récipient sous pression (20) sera acheminé au dispositif de transformation de combustible ou au deuxième récipient sous pression (40) en fonction du fait qu'il reste suffisamment de temps jusqu'à l'opération de remplissage prévue du récipient sous pression (20, 40, 60) pour ajuster les températures et/ou les pressions des récipients sous pression (20, 40, 60) aux valeurs de consigne de température et/ou aux valeurs de consigne de pression respectives des récipients sous pression (20, 40, 60) uniquement par un prélèvement ciblé de combustible du ou des récipients sous pression (20, 40, 60) dont les températures et/ou les pressions ne correspondent pas déjà aux valeurs de consigne de température et/ou aux valeurs de consigne de pression respectives, et par un acheminement du combustible au dispositif de transformation de combustible.

8. Système de récipients sous pression (10) dans un véhicule, comprenant plusieurs récipients sous pression (20, 40, 60) et un dispositif de commande (80), les récipients sous pression (20, 40, 60) étant réalisés pour stocker un combustible et étant en communication fluidique les uns avec les autres ainsi qu'avec un dispositif de transformation de combustible par l'intermédiaire de vannes (22, 42, 62, 72),
le dispositif de commande (80) étant réalisé pour l'ouverture et/ou la fermeture des vannes (22, 42, 62, 72) de telle sorte
que du combustible provenant d'un premier récipient sous pression (20) peut être prélevé, le combustible dans le premier récipient sous pression (20) présentant une première température et une première pression,
et que le combustible prélevé du premier récipient sous pression (20) est acheminé
- à un dispositif de transformation de combustible, ou
- dans un deuxième récipient sous pression (40), le combustible dans le deuxième récipient sous pression (40) présentant une deuxième température et une deuxième pression,
le dispositif de commande (80) étant réalisé de telle sorte que les températures et/ou les pressions du combustible dans les plusieurs récipients sous pression (20, 40, 60) peuvent être réglées au moyen du dispositif de commande (80) respectivement à une valeur de consigne de température et/ou respectivement à une valeur de consigne de pression avant une opération de remplissage des récipients sous pression (20, 40, 60) de telle sorte que dans les plusieurs récipients sous pression (20, 40, 60), sans dépasser la pression de service maximale respective ni la température de service maximale respective du récipient sous pression (20, 40, 60) respectif, la quantité du combustible introduit par une opération de remplissage des récipients sous pression (20, 40, 60), effectuée en même temps et pendant une même durée, à partir d'une source de remplissage unique est aussi grande que possible.

9. Système de récipients sous pression (10) selon la revendication 8, dans lequel le dispositif de commande (80) est réalisé de telle sorte que le dispositif de commande (80) prend la décision si le combustible prélevé du premier récipient sous pression (20) sera acheminé au dispositif de transformation de combustible ou au deuxième récipient sous pression (40) en fonction du fait qu'il reste suffisamment de temps jusqu'à l'opération de remplissage prévue des récipients sous pression (20, 40, 60) pour ajuster les températures et/ou les pressions des récipients sous pression (20, 40, 60) aux valeurs de consigne de température et/ou aux valeurs de consigne de pression respectives des récipients sous pression (20, 40, 60) uniquement par un prélèvement ciblé de combustible du ou des récipients sous pression (20, 40, 60) dont les températures et/ou les pressions ne correspondent pas déjà aux valeurs de consigne de température et/ou aux valeurs de consigne de pression respectives, et par un acheminement du combustible au dispositif de transformation de combustible.

10. Système de récipients sous pression (10) selon la revendication 8 ou 9, dans lequel le dispositif de commande (80) est réalisé de telle sorte que le dispositif de commande (80) détermine les valeurs de consigne de température et/ou les valeurs de consigne de pression des récipients sous pression (20, 40, 60) sur la base de réseaux de caractéristiques, les réseaux de caractéristiques présentant respectivement plusieurs courbes caractéristiques pour la température du combustible en fonction de la pression du combustible pour différentes conditions initiales du combustible dans les récipients sous pression (20, 40, 60) respectifs au début de l'opération de remplissage des récipients sous pression (20, 40, 60) avec du combustible provenant d'une source de remplissage unique.
